# EUROPEAN PATENT SPECIFICATION

(11) **EP 3 269 618 B1**
(45) Date of publication and mention of the grant of the patent: **09.09.2020**
(21) Application number: 17180026.1
(22) Date of filing: 06.07.2017
(51) Int. Cl.: B62B 9/10, B62B 7/06

(54) **A KIND OF FOLDABLE AND CARRIABLE TROLLEY**
EINE ART KLAPPBARER UND TRAGBARER WAGEN
TYPE DE CHARIOT PLIABLE ET TRANSPORTABLE

(30) Priority: 14.07.2016 CN 201620755055 U
(43) Date of publication of application: 17.01.2018
(73) Proprietor: Ou, Guangquan, Zhongshan City Guangdong 528400 (CN)
(72) Inventor: Ou, Guangquan, Zhongshan City Guangdong 528400 (CN)
(74) Representative: Wang, Bo

(56) References cited:
- CN-U- 205 769 520
- GB-A- 2 464 832
- US-A1- 2013 154 240
- US-A1- 2013 234 419
- US-A1- 2013 264 787

## Description

### Technical Field

This Patent Application is related to the technical field of children products, in particular a kind of foldable trolley.

### Background Technology

The trolley is a very common children product. A child takes a trolley and an adult pushes it forward, which not only greatly facilitates nursing, but also makes the child safer and feel more comfortable. However, With a complicated structure, most of the existing trolleys cannot be folded and some can only be partially folded part by part. As a result, many users cannot fold the trolley skillfully and they have trouble in unfolding the trolley part by part. Moreover, the folded trolley has a large volume and is inconvenient to carry. Thus, it occupies a large space and causes inconvenience to storage or transportation if it remains unused or needs to be transported.

CN205769520U discloses a foldable lightweight trolley for young kids, comprising a first link device and a second link device, both of which comprising a lower push rod, a front wheel bracing piece and rear wheel bracing piece, a lower end of an upper push rod is hinged with an upper end the lower push rod, a lower part of the lower push rod is provided with major joint, the major joint is hinged with the upper ends of the front wheel bracing piece and the rear wheel bracing piece, a joint group is provided at the hinging area between the upper push rod and the lower push rod, the joint group is hinged with a pull rod, a lower end of pull rod is connected with a sliding sleeve slidingly connected with the rear wheel bracing piece.

### Content of the Patent Application

This Patent Application is aimed at providing a kind of foldable and carriable trolley featuring humanized structural design, easy operation in folding, folding linkage and convenient use.

To solve the above problem, we adopt the following technical proposal for this Patent Application according to claim 1.

Preferably, the trolley also includes the front wall group and the ceiling, the rear of the tube frame of the front wall group is installed in the middle of the handlebar bottom tube through a spindle, the tail end of the tube frame of the front wall group and the rear of the seat frame tube are flexibly connected to the middle part of the lower supporting tube through a mobile transitional connecting rod; the ceiling is installed on the ceiling tube and the ceiling tube is connected to the upper joint.

Preferably, the seat frame connector is a flat-on "7" shape, the front supporting tube and it constitute a curved bar connecting structure.

This Patent Application has the following advantages: As components, such as the handlebar, the front foot tube, the rear foot tube and the seat frame and son on, are connected and linked, they can be folded quickly and simultaneously. After they are folded, the overall volume becomes smaller and all the parts can be carried by an extension handlebar. Besides, they can be unfolded simultaneously and consequently produce great convenience for the user.

### Specification With Pictures

Fig. 1 shows the unfolded structure of the Patent Application;
Fig. 2 shows the structure of the Patent Application in the folding process;
Fig. 3 shows the folded structure of the Patent Application.

In the picture, 1 is the handlebar top tube, 2 is the ceiling tube, 3 is the handlebar bottom tube, 4 is the lower supporting tube, 5 is the rear foot tube, 6 is the front foot tube, 7 is the front supporting tube, 8 is the seat frame connector, 9 is the upper joint, 10 is the front wall group, 11 is the seat frame tube, 12 is the extension handlebar, 13 is the backrest upper tube, 14 is the backrest lower tube, 15 is the rear foot joint, 16 is the seat frame and 17 is the foot joint rod.

### Specific Implementation Way

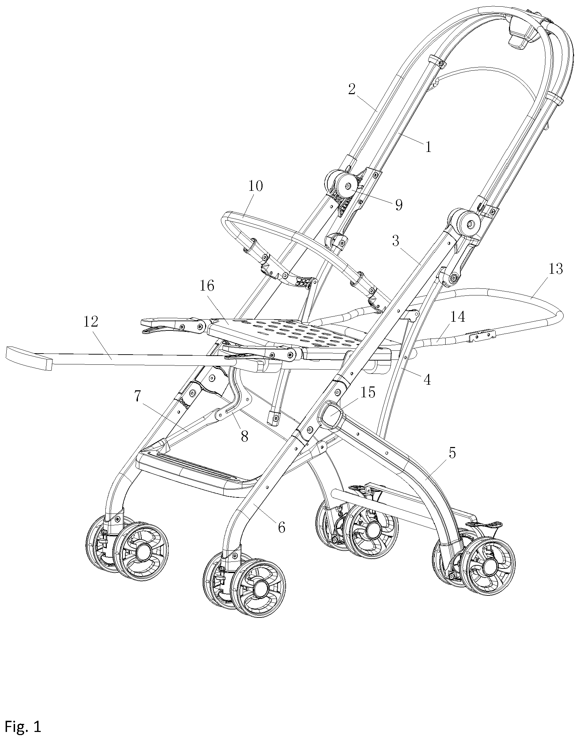

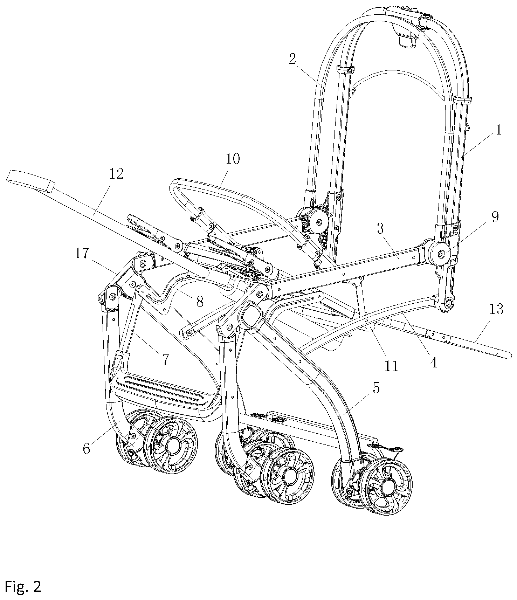

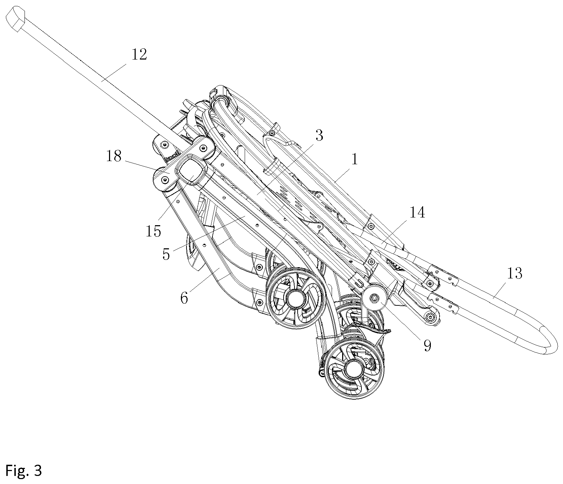

Referring to Fig. 1, Fig. 2 and Fig. 3, the foldable and carriable trolley described in this execution mode consists of the front wheel group, the rear wheel group, seat frame 16 and the handlebar; the front wheel group is installed at the bottom of front foot tube 6, the rear wheel group is installed at the bottom of rear foot tube 5, seat frame 16 is installed between the rear foot tube and the handlebar; the handlebar consists of top tube 1 and bottom tube 3, and the rear end of bottom tube 3 is connected to top tube 1 through mobile upper joint 9; the upper end of front foot tube 6 and rear foot tube 5 can be flexibly connected to the front end of handlebar bottom tube 1, the middle-upper part of rear foot tube 5 is connected to rotatable lower supporting tube 4, and the tail end of lower supporting tube 4 can be rotatably connected to the lower end of handlebar top tube 1.

The Seat frame 16 is installed in seat frame tube 11, both sides at the rear end of seat frame tube 11 are connected to the middle part of right and left lower supporting tubes 4 through a spindle, both sides in the middle of seat frame 16 are connected to rotatable seat frame connector 8, the front end of seat frame connector 8 is rotatably connected to the tail end of front supporting tube 7, and the front end of front supporting tube 7 is connected to the middle part of front foot tube 6.

Extension handlebar 12 is installed below seat frame 16 while showing itself ahead of it; backrest top tube 13 which can be folded upwards is installed at the rear of seat frame 16, the front end of backrest top tube 13 is flexibly installed on the rotatable bracket, the rotatable bracket is fixed at the tail end of backrest bottom tube 14, and the backrest bottom tube is installed on seat frame tube 11.

Flexible foot joint rod 17 is installed between the front end of handlebar bottom tube 3 and the tail end of front foot tube 6, and the upper end of rear foot tube 5 is connected to foot joint rod 17 through flexible rear foot joint 15.

lt also consists of front wall group 10 and the ceiling, the rear of the tube frame of front wall group 10 is installed in the middle of handlebar bottom tube 3 through a spindle, the tail end of the tube frame of front wall group 10 and the rear of seat frame tube 11 are flexibly connected to the middle part of lower supporting tube 4 through a mobile transitional connecting rod; the ceiling is installed on ceiling tube 2 and ceiling tube 2 is connected to upper joint 9.

Seat frame connector 8 is shaped a flat-on "7", front supporting tube 7 and it constitute a curved bar connecting structure.

The folding process: turn handlebar top tube 1 upwards and push it forward to drive handlebar 3 and lower supporting tube 4 near rear foot tube 5, simultaneously lower supporting tube 4 and front supporting tube 7 move front foot tube 6 to get close rear foot tube 5.

The folding process of the front wall group: the bottom of front wall group 10 is fixed on lower supporting tube 4 and the angle of the upper part is restricted by the mesh belt. When the trolley is folded, lower supporting tube 4 drives the front wall group to close and finally attach rear foot tube 5 as the angle is shrunk automatically by soft ribbon.

The folding process of the seat frame tube: the rear end of seat frame tube 11 is fixed at the rear of lower supporting tube 4 and the front end is connected to handlebar bottom tube 3 through seat frame connector 8. When handlebar top tube 1 and handlebar bottom tube 3 are folded, seat frame connector 8 drives seat frame tube 11 close to rear foot tube 5.

The unfolding process: unfold the trolley by raising handlebar top tube 1. to drive Handlebar 3 and lower supporting tube 4 to move away from rear foot tube 5, at the same time, seat frame connector 8 turns and front supporting tube 7 and front foot tube 6 move away from rear foot tube 5 till the gear engages in front joint 9 and all parts finish relative movement.

After the trolley is folded, backrest upper tube 3 and lower tube 14 are equally folded with ribbon fixed; extension handlebar 12 can be extended and enable the user to drag the trolley.

A better execution mode of this Patent Application has been described in detail above and it cannot restrict the execution mode of this Patent Application, that is, changes and modifications made based on the claims shall be covered in the application range of this Patent Application.

## Claims

1. A foldable and carriable trolley, comprising a front wheel group, a rear wheel group, a seat frame (16) and a handlebar; the front wheel group is installed at a bottom of a front foot tube (6), the rear wheel group is installed at a bottom of a rear foot tube (5), and the seat frame (16) is installed between the front/rear foot tubes (6/5) and the handlebar; the handlebar consists of a top tube (1) and a bottom tube (3), and a rear end of the bottom tube (3) is connected to the top tube (1) through a mobile upper joint (9); an upper end of the front foot tube (6) and the rear foot tube (5) are flexibly connected to a front end of the handlebar bottom tube (3), a middle-upper part of the rear foot tube (5) is connected to a rotatable lower supporting tube (4), and a tail end of the lower supporting tube (4) is rotatably connected to a lower end of the handlebar top tube (1); the seat frame (16) is installed in a seat frame tube (11), both sides at a rear end of the seat frame tube (11) are connected to a middle part of a right and a left sides of the lower supporting tube (4) through a spindle, both sides in the middle of the seat frame (16) are connected to a rotatable seat frame connector (8), a front end of the seat frame connector (8) is rotatably connected to a tail end of a front supporting tube (7), and a front end of the front supporting tube (7) is connected to a middle part of the front foot tube (6);
being installed on the bottom, an extension handlebar (12) shows itself ahead of the seat frame (16); a backrest upper tube (13) which is foldable upward is installed at a rear part of the seat frame (16), a front end of the backrest upper tube (13) is flexibly installed on a rotatable bracket, the rotatable bracket is fixed at a tail end of a backrest lower tube (14), and the backrest lower tube (14) is installed on the seat frame tube (11);
**characterized in that,** a flexible foot joint rod (17) is installed between a front end of the handlebar bottom tube (3) and a tail end of the front foot tube (6), and an upper end of the rear foot tube (5) is connected to the foot joint rod (17) through a flexible rear foot joint (15).

2. The foldable and carriable trolley described in claim 1, further comprising a front wall group (10) and a ceiling, a rear of a tube frame of the front wall group (10) is installed in the middle of the handlebar bottom tube (3) through another spindle, a tail end of the tube frame of the front wall group (10) and the rear end of the seat frame tube (11) are flexibly connected to the middle part of the lower supporting tube (4) through a mobile transitional connecting rod; the ceiling is installed on a ceiling tube (2) and the ceiling tube (2) is connected to the upper joint (9).

3. The foldable and carriable trolley described in claim 1, wherein the seat frame connector (8) has a shape of a flat-on "7", the front supporting tube (7) and the seat frame connector (8) constitute a curved bar connecting structure.

## Patentansprüche

1. Zusammenklappbarer und tragbarer Wagen, umfassend eine Vorderradgruppe, eine Hinterradgruppe, einen Sitzrahmen (16) und eine Griffstange; wobei die Vorderradgruppe an einem Unterteil eines vorderen Fußrohrs (6) angebracht ist, die Hinterradgruppe an einem Unterteil eines hinteren Fußrohrs (5) angebracht ist und der Sitzrahmen (16) zwischen den vorderen/hinteren Fußrohren (6/5) und der Griffstange angebracht ist; wobei die Griffstange aus einem oberen Rohr (1) und einem unteren Rohr (3) besteht und ein hinteres Ende des unteren Rohrs (3) mit dem oberen Rohr (1) durch ein bewegliches oberes Gelenk (9) verbunden ist; wobei ein oberes Ende des vorderen Fußrohrs (6) und des hinteren Fußrohrs (5) flexibel mit einem vorderen Ende des unteren Griffstangenrohrs (3) verbunden sind, ein mittlerer, oberer Teil des hinteren Fußrohrs (5) mit einem drehbaren, unteren Stützrohr (4) verbunden ist und ein Endstück des unteren Stützrohrs (4) drehbar mit einem unteren Ende des oberen Griffstangenrohrs (1) verbunden ist; wobei der Sitzrahmen (16) in einem Sitzrahmenrohr (11) angebracht ist, beide Seiten an einem hinteren Ende des Sitzrahmenrohrs (11) mit einem mittleren Teil einer rechten und einer linken Seite des unteren Stützrohrs (4) durch eine Spindel verbunden sind, beide Seiten in der Mitte des Sitzrahmens (16) mit einem drehbaren Sitzrahmenverbindungsstück (8) verbunden sind, ein vorderes Ende des Sitzrahmenverbindungsstücks (8) drehbar mit einem Endstück eines vorderen Stützrohrs (7) verbunden ist und ein vorderes Ende des vorderen Stützrohrs (7) mit einem mittleren Teil des vorderen Fußrohrs (6) verbunden ist;
wobei sich eine Verlängerungsgriffstange (12), die an dem Unterteil angebracht ist, vor dem Sitzrahmen (16) zeigt; wobei oberes Rückenlehnerohr (13), das nach oben klappbar ist, an einem hinteren Teil des Sitzrahmens (16) angebracht ist, ein vorderes Ende des oberen Rückenlehnerohrs (13) flexibel an einer drehbaren Halterung angebracht ist, die drehbare Halterung an einem Endstück eines unteren Rückenlehnerohrs (14) fixiert ist und das untere Rückenlehnerohr (14) auf dem Sitzrahmenrohr (11) angebracht ist;
**dadurch gekennzeichnet, dass** eine flexible Fußgelenkstange (17) zwischen einem vorderen Ende des unteren Griffstangenrohrs (3) und einem Endstück des vorderen Fußrohrs (6) angebracht ist und ein oberes Ende des hinteren Fußrohrs (5) mit der Fußgelenkstange (17) durch ein flexibles hinteres Fußgelenk (15) verbunden ist.

2. Zusammenklappbarer und tragbarer Wagen nach Anspruch 1, weiter umfassend eine vordere Wandgruppe (10) und eine Decke, wobei ein Hinterteil eines Rohrrahmens der vorderen Wandgruppe (10) in der Mitte des unteren Griffstangenrohrs (3) durch eine weitere Spindel angebracht ist, ein Endstück des Rohrrahmens der vorderen Wandgruppe (10) und das hintere Ende des Sitzrahmenrohrs (11) flexibel mit dem mittleren Teil des unteren Stützrohrs (4) durch eine bewegliche Übergangsverbindungsstange verbunden sind; wobei die Decke auf einem Deckenrohr (2) angebracht ist und das Deckenrohr (2) mit dem oberen Gelenk (9) verbunden ist.

3. Zusammenklappbarer und tragbarer Wagen nach Anspruch 1, wobei das Sitzrahmenverbindungsstück (8) die Form einer flachliegenden "7" aufweist, das vordere Stützrohr (7) und das Sitzrahmenverbindungsstück (8) eine gekrümmte Stabverbindungsstruktur bilden.

## Revendications

1. Chariot pliable et transportable, comprenant un groupe de roues avant, un groupe de roues arrière, un châssis de siège (16) et un guidon ; le groupe de roues avant est installé au niveau d'une partie inférieure d'un tube de pied (6), le groupe de roues arrière est installé au niveau d'une partie inférieure d'un tube de pied arrière (5) et le châssis de siège (16) est installé entre les tubes de pied avant/arrière (6/5) et le guidon ; le guidon est constitué d'un tube supérieur (1) et d'un tube inférieur (3), et une extrémité arrière du tube inférieur (3) est connectée au tube supérieur (1) par l'intermédiaire d'un raccord supérieur mobile (9) ; une extrémité supérieure du tube de pied avant (6) et le tube de pied arrière (5) sont connectés de manière flexible à une extrémité avant du tube inférieur de guidon (3), une partie centrale-supérieure du tube de pied arrière (5) est connectée à un tube de soutien inférieur rotatif (4) et une extrémité de queue du tube de soutien inférieur (4) est connectée de manière rotative à une extrémité inférieure du tube supérieur de guidon (1) ; le châssis de siège (16) est installé dans un tube de châssis de siège (11), les deux côtés au niveau d'une extrémité arrière du tube de châssis de siège (11) sont connectés à une partie centrale d'un côté droit et d'un côté gauche du tube de soutien inférieur (4) par l'intermédiaire d'une broche, les deux côtés dans le milieu du châssis de siège (16) sont connectés à un connecteur de châssis de siège rotatif (8), une extrémité avant du connecteur de châssis de siège (8) est connectée de manière rotative à une extrémité de queue d'un tube de soutien avant (7) et une extrémité avant du tube de soutien avant (7) est connectée à une partie centrale du tube de pied avant (6) ;
étant installé sur la partie inférieure, un guidon d'extension (12) se présente de lui-même devant le châssis de siège (16) ; un tube supérieur de dossier (13) qui est pliable vers le haut est installé au niveau d'une partie arrière du châssis de siège (16), une extrémité avant du tube supérieur de dossier (13) est installée de manière flexible sur un support rotatif, le support rotatif est fixé au niveau d'une extrémité de queue d'un tube inférieur de dossier (14), et le tube inférieur de dossier (14) est installé sur le tube de châssis de siège (11) ;
**caractérisé en ce que,** une tige de raccord de pied flexible (17) est installée entre une extrémité avant du tube inférieur de guidon (3) et une extrémité de queue du tube de pied avant (6), et une extrémité supérieure du tube de pied arrière (5) est connectée à la tige de raccord de pied (17) par l'intermédiaire d'un raccord de pied arrière flexible (15).

2. Chariot pliable et transportable selon la revendication 1, comprenant en outre un groupe de parois avant (10) et un plafond, un arrière d'un châssis de tube du groupe de parois avant (10) est installé dans le milieu du tube inférieur de guidon (3) par l'intermédiaire d'une autre broche, une extrémité de queue du châssis de tube du groupe de parois avant (10) et l'extrémité arrière du tube de châssis de siège (11) sont connectées de manière flexible à une partie centrale du tube de support inférieur (4) par l'intermédiaire d'une tige de connexion de transition mobile ; le plafond est installé sur un tube de plafond (2) et le tube de plafond (2) est connecté à un raccord supérieur (9).

3. Chariot pliable et transportable selon la revendication 1, dans lequel le connecteur de châssis de siège (8) présente une forme d'un « 7 » à plat, le tube de soutien avant (7) et le connecteur de châssis de siège (8) constituent une structure de connexion de barre incurvée.
